# EUROPEAN PATENT APPLICATION

(11) **EP 2 658 294 A1**
(43) Date of publication of application: **30.10.2013**
(21) Application number: 11851398.5
(22) Date of filing: 22.12.2011
(51) Int. Cl.: H04W 4/24, H04W 88/14

(54) **EXCHANGE AND COMMUNICATION MANAGEMENT METHOD**

(30) Priority: 24.12.2010 JP 2010288785
(71) Applicant: NTT DOCOMO, INC., Chiyoda-ku Tokyo 100-6150 (JP)
(72) Inventor: WAKUI Michiko, Tokyo 100-6150 (JP); ASO Hisayuki, Tokyo 100-6150 (JP); YAMAGUCHI Hiromasa, Tokyo 100-6150 (JP)
(74) Representative: Viering, Jentschura & Partner
(86) International application number: PCT/JP2011/079886
(87) International publication number: WO 2012/086785

(57) **Abstract**

When a request to start or a request to terminate mobile communication by a mobile communication terminal 2 or another exchange is received, a remaining communication volume update module 43 starts or stops updating a remaining communication volume information based on data communication by the mobile communication terminal 2. When a request to set or a request to reset a preservation state in the mobile communication by the mobile communication terminal 2 or another exchange is received, the remaining communication volume update module 43 stops or starts updating the remaining communication volume information based on data communication by the mobile communication terminal 2.

## Description

### Technical Field

The present invention relates to an exchange and a communication management method.

### Background Art

Conventionally, there exists a communication system using GPRS (General Packet Radio Service) to perform mobile communication with mobile communication terminals. In such a communication system, a GGSN (Gateway GPRS Support Node), which is a gateway exchange for connecting different networks, and a plurality of exchanges SGSN (Service GPRS Support Nodes) arranged subordinate to the GGSN are mainly provided. A mobile communication terminal connects to a network as a connection destination through the SGSN and the GGSN. A communication service on a prepaid billing system exists, in which a usage fee for communication is prepaid, and communication of a mobile communication terminal is allowed within the limit of the paid fee. The application of the communication service on the prepaid billing system to the communication system using GPRS is disclosed, for example, in Patent Literature 1.

### Citation List

### Patent Literature

[Patent Literature 1] Japanese Patent Application Laid-Open Publication No. 2005-204323

### Summary of Invention

### Technical Problem

Conventionally, in the communication service on the prepaid billing system, a method for accurately managing the remaining communication time or the remaining communication data volume that allows mobile communication by a mobile communication terminal has not been established.

The present invention is then made in view of such a problem. An object of the present invention is to provide an exchange and a communication management method capable of providing accurate billing management that matches the actual communication track record.

### Solution to Problem

In order to solve the problem above, an exchange according to an aspect of the present invention relays communication data by mobile communication when a mobile communication terminal performs mobile communication. The exchange includes reception means for receiving a request signal from the mobile communication terminal or another exchange, remaining communication volume storage means for storing remaining communication volume information indicative of a remaining communication time or a remaining communication data volume that allows the mobile communication by the mobile communication terminal, and remaining communication volume update means for updating the remaining communication volume information stored in the remaining communication volume storage means. When the reception means receives a request to start the mobile communication by the mobile communication terminal, the remaining communication volume update means starts updating the remaining communication volume information based on data communication by the mobile communication terminal. When the reception means receives a request to terminate the mobile communication by the mobile communication terminal or another exchange, the remaining communication volume update means stops updating the remaining communication volume information based on data communication by the mobile communication terminal. When the reception means receives a request to set a preservation state in which radio resources are released with a connection state being logically kept in the mobile communication by the mobile communication terminal, the remaining communication volume update means stops updating the remaining communication volume information based on data communication by the mobile communication terminal. When the reception means receives a request to reset the preservation state in the mobile communication by the mobile communication terminal or another exchange, the remaining communication volume update means starts updating the remaining communication volume information based on data communication by the mobile communication terminal.

A communication management method according to an aspect of the present invention includes a reception step in which an exchange that relays communication data by mobile communication when a mobile communication terminal performs mobile communication receives a request signal from the mobile communication terminal or another exchange, a remaining communication volume storage step in which the exchange stores remaining communication volume information indicative of a remaining communication time or a remaining communication data volume that allows the mobile communication by the mobile communication terminal, and a remaining communication volume update step in which the exchange updates the remaining communication volume information stored in the remaining communication volume storage step. When a request to start the mobile communication by the mobile communication terminal is received in the reception step, the remaining communication volume update step starts updating the remaining communication volume information based on data communication by the mobile communication terminal. When a request to terminate the mobile communication by the mobile communication terminal or another exchange is received in the reception step, the remaining communication volume update step stops updating the remaining communication volume information based on data communication by the mobile communication terminal. When a request to set a preservation state in which radio resources are released with a connection state being logically kept in the mobile communication by the mobile communication terminal is received in the reception step, the remaining communication volume update step stops updating the remaining communication volume information based on data communication by the mobile communication terminal. When a request to reset the preservation state in the mobile communication by the mobile communication terminal or another exchange is received in the reception step, the remaining communication volume update step starts updating the remaining communication volume information based on data communication by the mobile communication terminal.

In the exchange and the communication management method in this manner, updating of the remaining communication volume information based on data communication by the mobile communication terminal is started when a request to start mobile communication by the mobile communication terminal is received, and updating of the remaining communication volume information based on data communication by the mobile communication terminal is stopped when a request to terminate mobile communication by the mobile communication terminal or another exchange is received. Accordingly, the track record of transmission/reception of communication data from start to end of mobile communication can be targeted for billing. Thus, accurate billing management that matches the actual communication track record can be provided. In addition, in the exchange and the communication management method in this manner, updating of the remaining communication volume information based on data communication by the mobile communication terminal is started when a request to set the preservation state in mobile communication by the mobile communication terminal is received, and updating of the remaining communication volume information based on data communication by the mobile communication terminal is stopped when a request to reset the preservation state in mobile communication by the mobile communication terminal or another exchange is received. Accordingly, the preservation state, that is, a period of time during which a user is temporarily not performing data communication can be exempted from billing. Thus, accurate billing management that matches the actual communication track record can be provided.

In order to solve the problem above, an exchange according to an aspect of the present invention relays communication data by mobile communication when a mobile communication terminal performs mobile communication. The exchange includes reception means for receiving a request signal from the mobile communication terminal or another exchange, remaining communication volume storage means for storing remaining communication volume information indicative of a remaining communication time or a remaining communication data volume that allows the mobile communication by the mobile communication terminal, remaining communication volume update means for updating the remaining communication volume information stored in the remaining communication volume storage means, and communication destination storage means for storing communication destination information indicative of a communication destination targeted for updating of the remaining communication volume information by the remaining communication volume update means. When the reception means receives a connection request for the mobile communication to the communication destination indicated by the communication destination information stored in the communication destination storage means by the mobile communication terminal in a prescribed period, the remaining communication volume update means updates the remaining communication volume information of the mobile communication terminal based on the prescribed period of time.

A communication management method according to an aspect of the present invention includes a reception step in which an exchange that relays communication data by mobile communication when a mobile communication terminal performs mobile communication receives a request signal from the mobile communication terminal or another exchange, a remaining communication volume storage step in which the exchange stores remaining communication volume information indicative of a remaining communication time or a remaining communication data volume that allows the mobile communication by the mobile communication terminal, a remaining communication volume update step in which the exchange updates the remaining communication volume information stored in the remaining communication volume storage step, and a communication destination storage step in which the exchange stores communication destination information indicative of a communication destination targeted for updating of the remaining communication volume information in the remaining communication volume update step. When a connection request for the mobile communication to the communication destination indicated by the communication destination information stored in the communication destination storage step by the mobile communication terminal is received in a prescribed period in the reception step, the remaining communication volume update step updates the remaining communication volume information of the mobile communication terminal based on the prescribed period of time.

In the exchange and the communication management method in this manner, when a connection request for mobile communication to a prescribed communication destination indicated by the communication destination information by the mobile communication terminal is received in a prescribed period, the remaining communication volume information of the mobile communication terminal is updated based on the prescribed period of time. Accordingly, only mobile communication to a prescribed communication destination can be targeted for billing. Thus, accurate and flexible billing management that matches the actual communication track record can be provided.

The communication destination storage means may store communication destination information indicative of a communication destination exempt from updating of the remaining communication volume information by the remaining communication volume update means. When the reception means receives a connection request for the mobile communication to a communication destination other than the communication destination indicated by the communication destination information stored in the communication destination storage means by the mobile communication terminal in a prescribed period, the remaining communication volume update means may update the remaining communication volume information of the mobile communication terminal based on the prescribed period of time. With such a configuration, when a connection request for mobile communication to a communication destination other than a prescribed communication destination indicated by the communication destination information by the mobile communication terminal is received in a prescribed period, the remaining communication volume information of the mobile communication terminal is updated based on the prescribed period of time. Accordingly, mobile communication to a prescribed communication destination can be exempted from billing. Thus, accurate and flexible billing management that matches the actual communication track record can be provided.

When the reception means receives a connection request for the mobile communication to the communication destination by the mobile communication terminal and a connection request for the mobile communication to a communication destination other than the communication destination in a prescribed period, the remaining communication volume update means may be designed not to update the remaining communication volume information of the mobile communication terminal. Accordingly, in a case where the mobile communication terminal performs mobile communication to a communication destination indicated by the communication destination information and a communication destination other than the communication destination indicated by the communication destination information in a prescribed period, billing exemption can be granted in the prescribed period. Thus, more flexible billing management that matches the actual communication track record can be provided.

### Advantageous Effects of Invention

Accurate billing management that matches the actual communication track record can be provided.

### Brief Description of Drawings

[Fig. 1] Fig. 1 is a schematic configuration diagram of a communication system according to the present embodiment.
[Fig. 2] Fig. 2 is a functional block diagram illustrating functions of an exchange according to a first embodiment.
[Fig. 3] Fig. 3 is a functional block diagram illustrating functions of an exchange according to a second embodiment.
[Fig. 4] Fig. 4 is a diagram illustrating a configuration of data stored in a remaining communication volume storage module of the exchange according to the first and second embodiments.
[Fig. 5] Fig. 5 is a diagram illustrating a configuration of data stored in a communication destination storage module of the exchange according to the second embodiment.
[Fig. 6] Fig. 6 is a hardware configuration diagram of the exchange according to the first and second embodiments.
[Fig. 7] Fig. 7 is a sequence diagram illustrating a communication management method (during connection) by the exchange according to the first embodiment.
[Fig. 8] Fig. 8 is a sequence diagram illustrating the communication management method (during preservation) by the exchange according to the first embodiment.
[Fig. 9] Fig. 9 is a sequence diagram illustrating the communication management method (during disconnection) by the exchange according to the first embodiment.
[Fig. 10] Fig. 10 is a sequence diagram illustrating a communication management method by the exchange according to the second embodiment.

### Description of Embodiments

Embodiments of an exchange and a communication management method according to the present invention will be described in detail below in conjunction with the figures. It is noted that in the description of the figures the same elements are denoted with the same reference signs, and an overlapping description will be omitted.

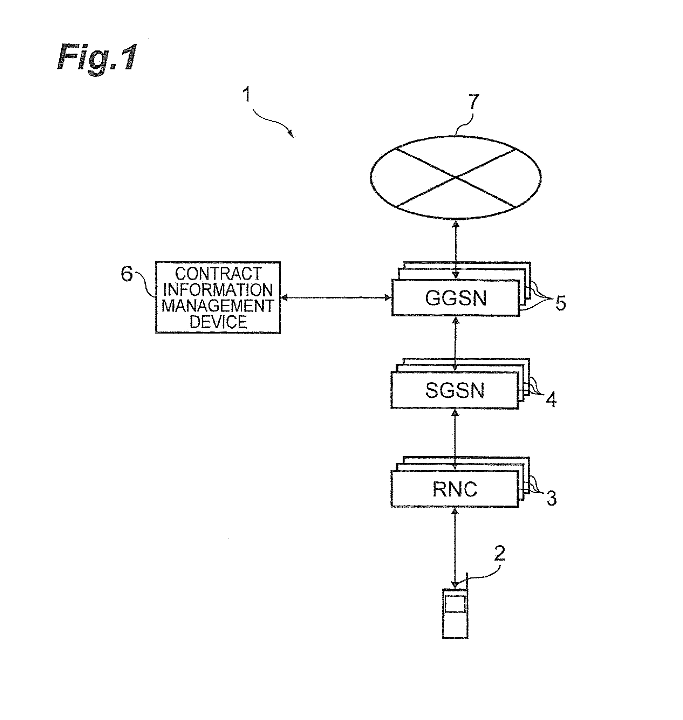

Fig. 1 is a schematic configuration diagram of a communication system 1 according an aspect of the present invention. As illustrated in Fig. 1, the communication system 1 according to the present embodiment includes a mobile communication terminal 2, a plurality of RNCs 3, a plurality of SGSN 4, a plurality of GGSNs 5, a contract information management device 6, and a network 7. In the communication system 1, the mobile communication terminal 2 connects to the network 7 through the RNCs 3, the SGSN 4, and the GGSNs 5 and performs mobile communication.

The mobile communication terminal 2 is a device that can perform mobile communication according to a cellular system and specifically corresponds to a mobile phone, a smartphone, a portable personal computer, a PDA (Personal Digital Assistant), and the like. The mobile communication terminal 2 performs mobile communication, for example, on a prepaid billing system. Here, the prepaid billing system is a system in which a certain fixed fee is prepaid to a communication carrier providing mobile communication, so that mobile communication can be performed within the time or communication data volume corresponding to the prepaid fee.

Each of the RNCs 3 is a radio network control device that performs control, for example, to set or open a channel when communication is started between the mobile communication terminal 2 and a base station (not illustrated) present between the mobile communication terminal 2 and the RNC 3, and to switch base stations to be used as the mobile communication terminal 2 moves. Specifically, the RNC 3 corresponds to an RNC (Radio Access Network).

Each of the SGSNs 4 is a packet access control node that grasps the position of the mobile communication terminal 2 performing packet communication, transfers user traffic between the GGSNs 5 described later and the mobile communication terminal 2, and controls path setting for packet communication. Specifically, the SGSN 4 corresponds to an SGSN (Service GPRS Support Node).

Each of the GGSNs 5 is a packet gateway node that controls connection with the network 7 in accordance with a connection request from the mobile communication terminal 2 and serves a function of an access server to the network 7. Specifically, the GGSN 5 corresponds to a GGSN (Gateway GPRS Support Node).

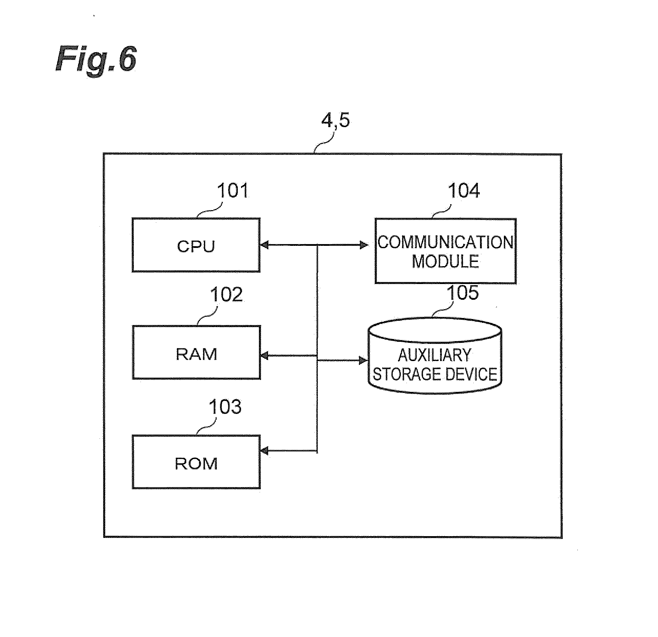

The SGSN 4 and the GGSN 5 are exchanges for relaying communication data when the mobile communication terminal 2 performs mobile communication, for example, on the prepaid billing system. Fig. 6 shows a hardware configuration of the SGSN 4 and the GGSN 5. As illustrated in Fig. 6, the SGSN 4 and the GGSN 5 are each configured with hardware mainly including a CPU (Central Processing Unit) 101, a RAM (Random Access Memory) 102 and a ROM 103 (Read Only Memory) serving as main storages, a communication module 104, and an auxiliary storage device 105. These components operate to fulfill each function of the SGSN 4 and the GGSN 5 as described later.

The contract information management device 6 is a database for holding positional information, service subscription information, authentication information, and the like pertaining to a subscriber to the operator of the mobile communication. Specifically, the contract information management device 6 corresponds to an HLR (Home Location Register). The network 7 is an external IP network and specifically corresponds to the Internet. Although the communication system 1, the mobile communication terminal 2, the RNC 3, the SGSN 4, the GGSN 5, the contract information management device 6, and the network 7 are described using the same reference numerals in first and second embodiments below, each element refers to an element having a different configuration in each embodiment. For example, the SGSN 4 in the first embodiment and the SGSN 4 in the second embodiment are different elements. Similarly, the GGSN 5 in the first embodiment and the GGSN 5 in the second embodiment are different elements.

### (First Embodiment)

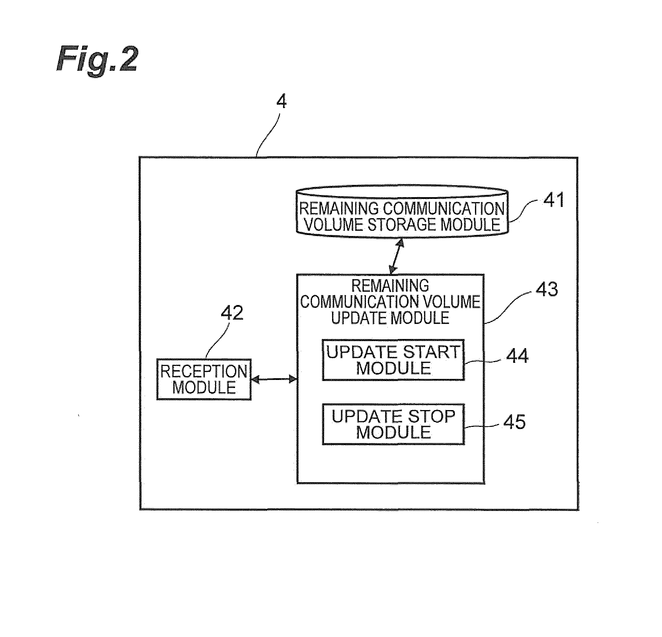

First, a function and a configuration of the SGSN 4 as an exchange according to the first embodiment will be described. As illustrated in Fig. 2, the SGSN 4 includes, as functional components, a remaining communication volume storage module 41 (remaining communication volume storage means), a reception module 42 (reception means), and a remaining communication volume update module 43 (remaining communication volume update means). The remaining communication volume update module 43 includes an update start module 44 and an update stop module 45.

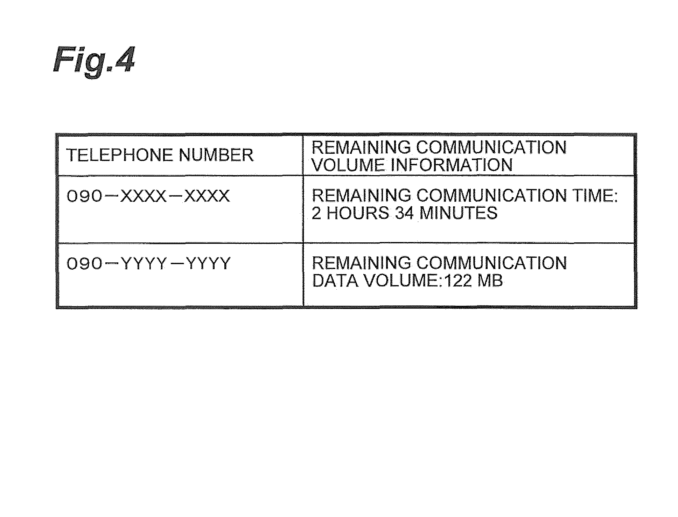

The remaining communication volume storage module 41 stores remaining communication volume information indicative of the remaining communication time or the remaining communication data volume that allows mobile communication by the mobile communication terminal 2. The remaining communication time or the remaining communication data volume is, for example, the balance left after taking the charge for the actual mobile communication from the prepaid fee, that is, the amount equivalent to the charge that can be used to perform mobile communication, i.e. the time or communication data volume that allows mobile communication. Fig. 4 is a diagram illustrating an example of the remaining communication volume information stored in the remaining communication volume storage module 41. As illustrated in Fig. 4, the remaining communication volume information is stored in association with the telephone number of the mobile communication terminal 2 indicating the remaining communication volume information. As illustrated in Fig. 4, the remaining communication time "2 hours 34 minutes" and the remaining communication data volume "122 MB" as the remaining communication volume information are recorded and associated with telephone numbers "090-XXXX-XXXX" and "090-YYYY-YYYY," respectively. The remaining communication volume storage module 41 stores the latest remaining communication volume information by acquiring the remaining communication volume information from the contract information management device 6 and storing the same at any given timing. The remaining communication volume storage module 41 updates the remaining communication volume information stored in the contract information management device 6 with the latest information by transmitting the stored remaining communication volume information to the contract information management device 6 at any given timing. The remaining communication volume storage module 41 may acquire and store the remaining communication volume information from the contract information management device 6 in advance in the initial state.

The reception module 42 receives a request signal from the mobile communication terminal 2 or another exchange. Examples of the request signal include a request to start and a request to terminate mobile communication by the mobile communication terminal 2 or another exchange, a request to set and a request to reset a preservation state in which radio resources are released with the connection state logically kept in the mobile communication by the mobile communication terminal 2 or an exchange. The preservation state is a function in conformity with 3GPP (Third Generation Partnership Project). For example, when a non-communication state passes for a certain time during packet communication connection, the preservation state is set.

The remaining communication volume update module 43 updates the remaining communication volume information stored in the remaining communication volume storage module 41. The update start module 44 included in the remaining communication volume update module 43 starts updating the remaining communication volume information. The update stop module 45 included in the remaining communication volume update module 43 stops updating the remaining communication volume information.

Specifically, when the reception module 42 receives a request to start mobile communication by the mobile communication terminal 2, the update start module 44 starts updating the remaining communication volume information based on data communication by the mobile communication terminal 2. When the reception module 42 receives a request to reset the preservation state in the mobile communication by the mobile communication terminal 2 or another exchange, the update start module 44 starts updating the remaining communication volume information based on data communication by the mobile communication terminal 2. For example, upon starting updating of the remaining communication volume information indicative of the remaining communication time, the update start module 44 subtracts the remaining communication time as the remaining communication volume information by an amount corresponding to the communication time of data communication by the mobile communication terminal 2. For example, upon starting updating of the remaining communication volume information indicative of the remaining communication data volume, the update start module 44 subtracts the remaining communication data volume as the remaining communication volume information by an amount corresponding to the communication data volume of data communication by the mobile communication terminal 2.

When the reception module 42 receives a request to terminate mobile communication by the mobile communication terminal 2 or another exchange, the update stop module 45 stops updating the remaining communication volume information based on data communication by the mobile communication terminal 2. When the reception module 42 receives a request to set the preservation state in mobile communication by the mobile communication terminal 2, the update stop module 45 stops updating the remaining communication volume information based on data communication by the mobile communication terminal 2. For example, upon stopping updating of the remaining communication volume information indicative of the remaining communication time, the update stop module 45 stops subtraction of the remaining communication time as the remaining communication volume information. For example, upon stopping updating of the remaining communication volume information indicative of the remaining communication data volume, the update stop module 45 stops subtraction of the remaining communication data volume as the remaining communication volume information.

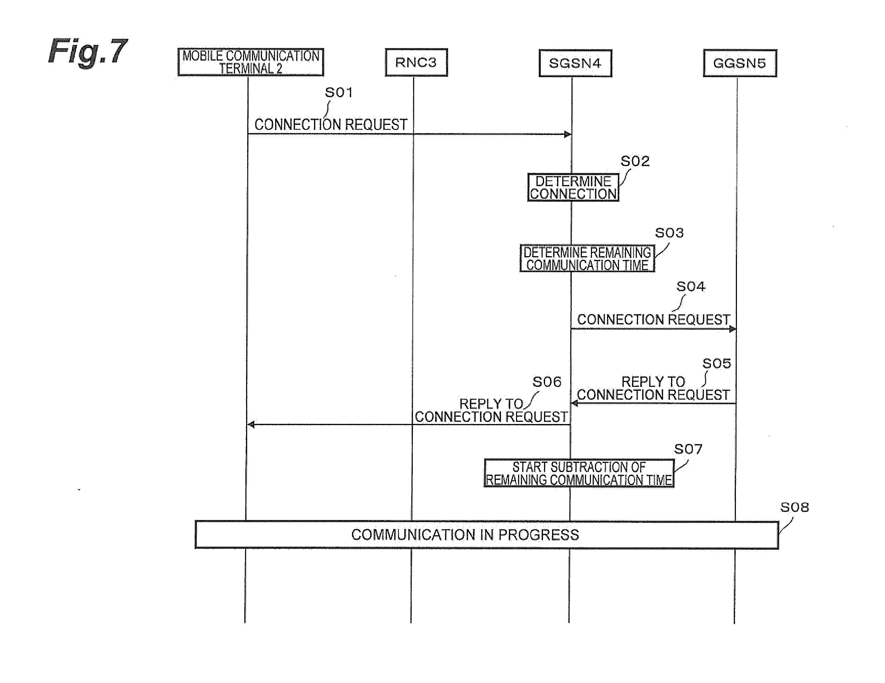

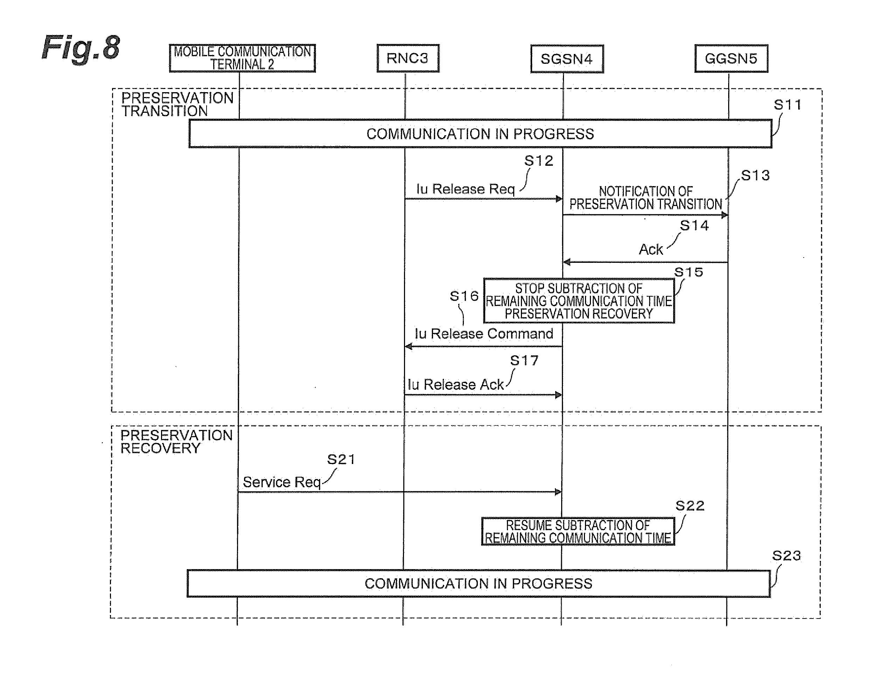

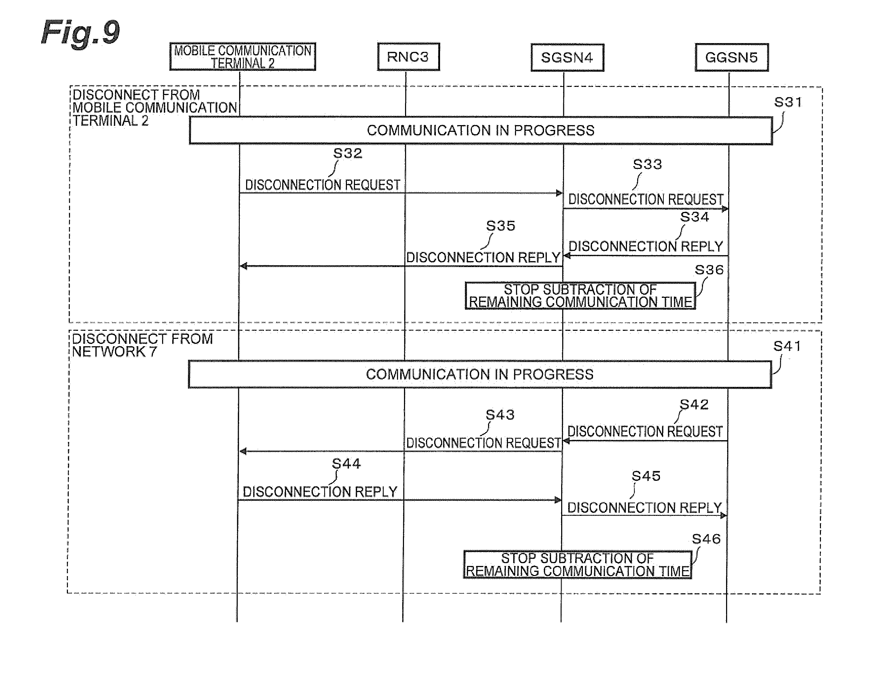

Referring to Figs. 7 to 9, the operation of the communication system 1 including the SGSN 4 according to the first embodiment will be described below, and, in addition, a communication management method by the SGSN 4 will be detailed. Fig. 7 is a sequence diagram illustrating operation at the start of mobile communication in the communication system 1. Fig. 8 is a sequence diagram illustrating operation at the start and at the end of the preservation state in mobile communication in the communication system 1. Fig. 9 is a sequence diagram illustrating operation at the end of mobile communication in the communication system 1.

First, Fig. 7 will be described. When the reception module 42 of the SGSN 4 receives a connection request (request to start mobile communication) from the mobile communication terminal. 2 (step S01), the SGSN 4 confirms the content of the contract of the mobile communication terminal 2 and determines whether to permit connection by the mobile communication terminal 2 (step S02). In step S02, if the SGSN 4 determines that connection is permitted, the SGSN 4 determines the remaining communication time of the mobile communication terminal 2 (step S03). Specifically, for example, the SGSN 4 extracts the telephone number of the mobile communication terminal 2 and extracts the remaining communication time associated with the telephone number that is stored in the remaining communication volume storage module 41, based on the extracted telephone number, thereby determining the remaining communication time. In the sequence diagrams in Figs. 7 to 9, the description is made based on the premise that the remaining communication volume information indicative of the remaining communication time is stored in the remaining communication volume storage module 41. However, the remaining communication time may be replaced with the remaining communication data volume as appropriate.

In step S03, if the SGSN 4 determines that the remaining communication time is left, the SGSN 4 transmits a connection request to the GGSN 5 (step S04). A reply to the connection request is transmitted from the GGSN 5 to the SGSN 4 (step S05). A reply to the connection request is transmitted from the SGSN 4 to the mobile communication terminal 2 (step S06). Thus, connection of packet communication by the mobile communication terminal 2 is established. Subsequently, the update start module 44 of the SGSN 4 starts subtraction of the remaining communication time (step S07), and a communication-in-progress state is entered in which mobile communication by the mobile communication terminal 2 is being performed (step S08). It is noted that the start of subtraction of the remaining communication time by the update start module 44 in step S07 may be executed immediately after any one of steps S03 to S06. Preferably, it is executed immediately after S06. If the start of subtraction of the remaining communication time by the update start module 44 is executed immediately after S06, the subtraction of the remaining communication time can be started after connection of packet communication by the mobile communication terminal 2 is established.

Fig. 8 will now be described. In the state in which communication by the mobile communication terminal 2 is in progress (step S 11), when the reception module 42 of the SGSN 4 receives an "Iu Release Req" signal (release request signal, request to set the preservation state) from the RNC 3 (step S01), a notification of preservation transition is transmitted from the SGSN 4 to the GGSN 5 (step S13). Subsequently, when the SGSN 4 receives an Ack signal (reply signal) to the notification of preservation transition from the GGSN 5 (step S14), the update stop module 45 of the SGSN 4 stops subtraction of the remaining communication time (step S15). Then, an "Iu Release Command" signal (release command signal) is transmitted from the SGSN 4 to the RNC 3, and an "Iu Release Ack" signal (release reply signal) is transmitted from the RNC 3 to the SGSN 4. It is noted that the stop of subtraction of the remaining communication time by the update stop module 45 of the SGSN 4 in step S15 may be executed immediately after any one of steps S12 to S17. Preferably, it is executed immediately after S14. If the stop of subtraction of the remaining communication time by the update stop module 45 is executed immediately after S14, the subtraction of the remaining communication time can be stopped after the notification of preservation transition is received by the GGSN 5 without fail. The operation in steps S11 to S17 above corresponds to the transition to the preservation state.

In the preservation state of mobile communication by the mobile communication terminal 2, when the reception module 42 of the SGSN 4 receives a "Service Req" signal (service request signal, request to reset the preservation state) from the mobile communication terminal 2 (step S21), the update start module 44 of the SGSN 4 resumes subtraction of the remaining communication time (step S22). Then, a communication-in-progress state is entered in which mobile communication by the mobile communication terminal 2 is being performed (step S23). The operation in steps S21 to S23 above corresponds to recovery from the preservation state. It is noted that the request to reset the preservation state is not limited to transmission from the mobile communication terminal 2. For example, in place of step S21, the GGSN 5 may transmit a request to reset the preservation state to the SGSN 4 when the GGSN 5 receives the user data of the mobile communication terminal 2 from the network "7, whereby radio communication between terminals is linked again thereby recovering from the preservation state.

Fig. 9 will now be described. In the state in which communication by the mobile communication terminal 2 is in progress (step S31), when the reception module 42 of the SGSN 4 receives a disconnection request (request to terminate mobile communication) from the mobile communication terminal 2 (step S32), a disconnection request is transmitted from the SGSN 4 to the GGSN 5 (step S33). Subsequently, a disconnection reply is transmitted from the GGSN 5 to the SGSN 4 (step S34), and a disconnection reply is transmitted from the SGSN 4 to the mobile communication terminal 2 (step S35). Then, the update stop module 45 of the SGSN 4 stops subtraction of the remaining communication time (step S36). It is noted that the stop of subtraction of the remaining communication time by the update stop module 45 of the SGSN 4 in step S36 may be executed immediately after any one of steps S32 to S36. Preferably, it is executed immediately after S35. If the stop of subtraction of the remaining communication time by the update stop module 45 is executed immediately after S35, the subtraction of the remaining communication time can be stopped after the disconnection reply is received by the mobile communication terminal 2 without fail. The operation in steps S31 to S35 above corresponds to disconnection from the mobile communication terminal 2.

On the other hand, in the state in which communication by the mobile communication terminal 2 is in progress (step S41), when the reception module 42 of the SGSN 4 receives a disconnection request (request to terminate mobile communication) from the GGSN 5 (step S42), the SGSN 4 transmits a disconnection request to the mobile communication terminal 2 (step S43). Subsequently, a disconnection reply is transmitted from the mobile communication terminal 2 to the SGSN 4 (step S44), and a disconnection reply is transmitted from the SGSN 4 to the GGSN 5 (step S45). Then, the update stop module 45 of the SGSN 4 stops subtraction of the remaining communication time (step S46). It is noted that the stop of subtraction of the remaining communication time by the update stop module 45 of the SGSN 4 in step S46 may be executed immediately after any one of steps S42 to S45. Preferably, it is executed immediately after S45. If the stop of subtraction of the remaining communication time by the update stop module 45 is executed immediately after S45, the subtraction of the remaining communication time can be stopped after the disconnection reply is received by the GGSN 5 without fail. The operation in steps S41 to S45 above corresponds to disconnection from the network 7.

The invention according to the present first embodiment can solve, for example, a problem that even the time during which a mobile communication terminal does not perform data communication is counted as a target for billing.

### (Second Embodiment)

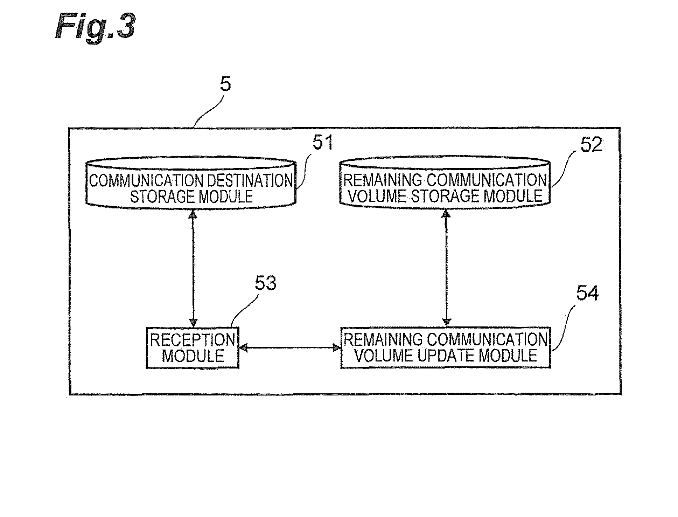

Next, a function and a configuration of the GGSN 5 as an exchange according to the second embodiment will be described. As illustrated in Fig. 3, the GGSN 5 includes, as functional components, a communication destination storage module 51 (communication destination storage means), a remaining communication volume storage module 52 (remaining communication volume storage means), a reception module 53 (reception means), and a remaining communication volume update module 54 (remaining communication volume update means).

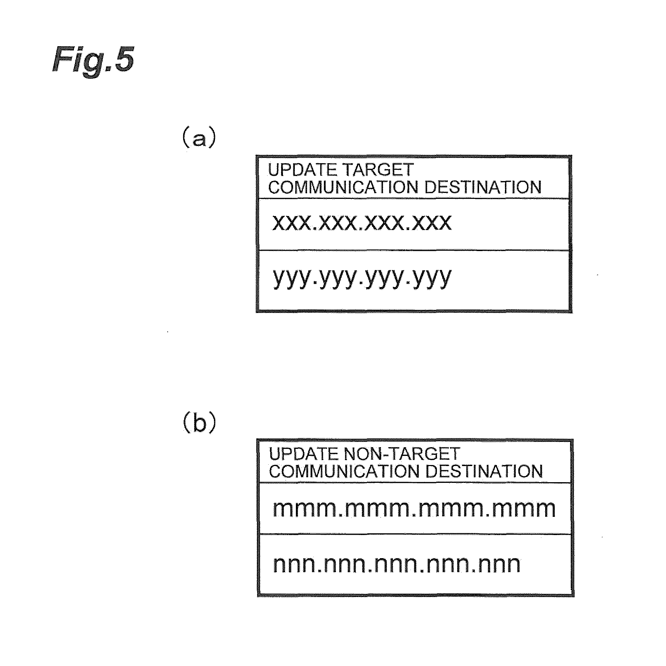

The communication destination storage module 51 stores communication destination information indicative of a communication destination (update target communication destination) that is targeted for updating of the remaining communication volume information by the remaining communication volume update module 54 described later. Fig. 5(a) is a diagram illustrating an example of communication destination information indicative of an update target communication destination that is stored in the communication destination storage module 51. As illustrated in Fig. 5(a), the IP addresses of communication destinations "xxx.xxx.xxx.xxx" and "yyy.yyy.yyy.yyy" are stored as the communication destination information indicative of update target communication destinations. A URL such as "http://xxx.xxx" may be stored as a communication destination in place of an IP address.

Here, the communication destination storage module 51 may store communication destination information indicative of a communication destination (update non-target communication destination) that is exempt from updating of the remaining communication volume information by the remaining communication volume update module 54. Fig. 5(b) is a diagram illustrating an example of communication destination information indicative of update non-target communication destinations that is stored in the communication destination storage module 51. As illustrated in Fig. 5(b), the IF addresses of communication destinations "mmm.mmm.mmm.mmm" and "nnn.nnn.nnn.nnn" are stored as communication destination information indicative of update non-target communication destinations. A URL such as "http://mmm.mmm" may be stored as a communication destination in place of an IP address. The communication destination storage module 51 may store communication destination information indicative of an update target communication destination and an update non-target communication destination in advance in the initial state.

The remaining communication volume storage module 52 is similar to the remaining communication volume storage module 41 according to the first embodiment, and therefore a description thereof is omitted. A notification of the remaining communication volume information stored in the remaining communication volume storage module 52 may be given upon a connection request from the SGSN 4 or may be acquired by asking the contract information management device 6 when a connection request is received from the SGSN 4.

The reception module 53 receives a request signal from the mobile communication terminal 2 or another exchange. An example of the request signal includes a connection request for mobile communication by the mobile communication terminal 2. Furthermore, the reception module 53 can determine whether a request signal to a prescribed communication destination is received in a prescribed period. For example, the reception module 53 determines whether it is received or not on a minute-by-minute basis in such a manner that a request signal to the IP address "xxx.xxx.xxx.xxx" is received from 17:12 to 17:13 and is not received from 17:13 to 17:14.

The reception module 53 can further determine whether a request signal to a communication destination other than a prescribed communication destination is received in a prescribed period. For example, the reception module 53 can determine whether it is received or not on a minute-by-minute basis in such a manner that a request signal to an IP address other than the IP address "mmm.mmm.mmm.mmm" is received from 17:12 to 17:13 and is not received from 17:13 to 17:14.

The reception module 53 can further determine whether a request signal to a prescribed communication destination and a request signal to a communication destination other than the prescribed communication destination are received in a prescribed period. For example, the reception module 53 can determine whether a request signal to the IP address "xxx.xxx.xxx.xxx" and a request signal to an IP address other than the IP address "mmm.mmm.mmm.mmm" are received from 17: 12 to 17: 13.

The remaining communication volume update module 54 updates the remaining communication volume information stored in the remaining communication volume storage module 52. Specifically, in the case where the communication destination information indicative of an update target communication destination is stored in the communication destination storage module 51, when the reception module 53 receives a connection request for mobile communication to the communication destination indicated by the communication destination information stored in the communication destination storage module 51 by the mobile communication terminal 2 in a prescribed period, the remaining communication volume update module 54 updates the remaining communication volume information of the mobile communication terminal 2 based on the prescribed period of time. For example, when a request signal to the IP address "xxx.xxx.xxx.xxx" as the update target communication destination is received from 17:12 to 17:13, the remaining communication volume update module 54 subtracts one minute from the remaining communication time of the mobile communication terminal 2. For example, when a request signal to the IP address "xxx.xxx.xxx.xxx" as the update target communication destination is received from 17:12 to 17:13, if the data communication volume from 17:12 to 17:13 is 21 MB, the remaining communication volume update module 54 subtracts 21 MB from the remaining data communication volume of the mobile communication terminal 2.

In the case where the communication destination information indicative of an update non-target communication destination is stored in the communication destination storage module 51, when the reception module 53 receives a connection request for mobile communication to a communication destination other than the communication destination indicated by the communication destination information stored in the communication destination storage module 51 by the mobile communication terminal 2 in a prescribed period, the remaining communication volume update module 54 updates the remaining communication volume information of the mobile communication terminal 2 based on the prescribed period of time. For example, when a request signal to an IP address other than the IP address "mmm.mmm.mmm.mmm" as the update non-target communication destination is received from 17:12 to 17:13, the remaining communication volume update module 54 subtracts one minute from the remaining communication time of the mobile communication terminal 2. For example, when a request signal to an IP address other than the IP address "mmm.mmm.mmm.mmm" as the update non-target communication destination is received from 17:12 to 17:13, if the data communication volume from 17:12 to 17:13 is 21 MB, the remaining communication volume update module 54 subtracts 21 MB from the remaining data communication volume of the mobile communication terminal 2.

Specifically, in the case where the communication destination information indicative of an update target communication destination is stored in the communication destination storage module 51, when the reception module 53 receives a connection request for mobile communication to an update target communication destination by the mobile communication terminal 2 and a connection request for mobile communication to a communication destination other than an update target communication destination in a prescribed period, the remaining communication volume update module 54 does not update the remaining communication volume information of the mobile communication terminal 2. For example, when a request signal to the IP address "xxx.xxx.xxx.xxx" as an update target communication destination and a request signal to an IP address other than the IP address "xxx.xxx.xxx.xxx" are received from 17:12 to 17:13, the remaining communication volume update module 54 does not update the remaining communication time or the remaining data communication volume.

Similarly, specifically, in the case where the communication destination information indicative of an update non-target communication destination is stored in the communication destination storage module 51, when the reception module 53 receives a connection request for mobile communication to an update non-target communication destination by the mobile communication terminal 2 and a connection request for mobile communication to a communication destination other than the update non-target communication destination in a prescribed period, the remaining communication volume update module 54 does not update the remaining communication volume information of the mobile communication terminal 2. For example, when a request signal to the IP address "mmm.mmm.mmm.mmm" as an update non-target communication destination and a request signal to an IP address other than the IP address "mmm.mmm.mmm.mmm" are received from 17:12 to 17:13, the remaining communication volume update module 54 does not update the remaining communication time or the remaining data communication volume. The remaining communication volume update module 54 may refer to Uplane data (user data), and, if communication directed to a communication destination targeted for updating is performed in a certain period of time, may update based on the period of time.

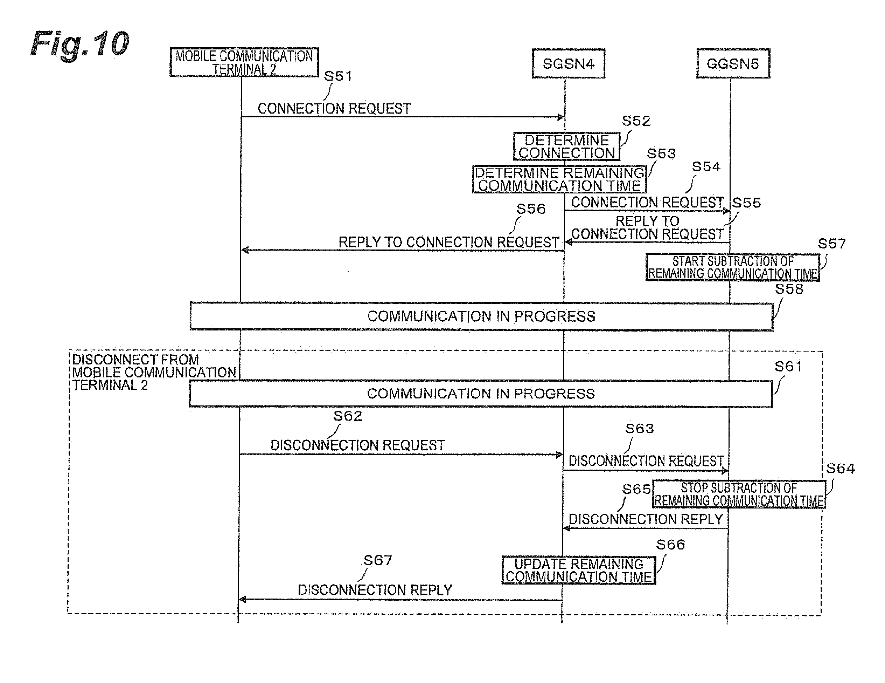

Referring to Fig. 10, the operation of the communication system 1 including the GGSN 5 according to the second embodiment will be described below, and, in addition, a communication management method by the GGSN 5 will be detailed. Fig. 10 is a sequence diagram illustrating operations at the start and at the end of mobile communication in the communication system 1.

When a connection request (request to start mobile communication) is transmitted from the mobile communication terminal 2 to the SGSN 4 (step S51), the SGSN 4 confirms, for example, the contents of the contract of the mobile communication terminal 2 and determines whether to permit connection by the mobile communication terminal 2 (step S52). In step S52, if the SGSN 4 determines that connection is permitted, the SGSN 4 determines the remaining communication time of the mobile communication terminal 2 (step S53). Next, the reception module 53 of the GGSN 5 receives a connection request from the SGSN 4 in accordance with the determination result of the remaining communication time in step S53 (step S54). A reply to the connection request is transmitted from the GGSN 5 to the SGSN 4 (step S55), and a reply to the connection request is transmitted from the SGSN 4 to the mobile communication terminal 2 (step S56). In step S54, a notification of the remaining communication time as the remaining communication volume information stored in the SGSN 4 is given from the SGSN 4 to the GGSN 5, and the remaining communication time in the notification is stored in the remaining communication volume storage module 52. Subsequently, the remaining communication volume update module 54 of the GGSN 5 starts subtraction of the remaining communication time (step S57), and a communication-in-progress state is entered in which mobile communication by the mobile communication terminal 2 is being performed (step S58).

The start of subtraction of the remaining communication time by the remaining communication volume update module 54 in step S57 may be executed immediately after any one of steps S54 to S56. Preferably, it is executed immediately after S56. If the start of subtraction of the remaining communication time by the remaining communication volume update module 54 is executed immediately after S56, the subtraction of the remaining communication time can be started after a reply to the connection request is received by the mobile communication terminal 2 without fail. Upon start of subtraction of the remaining communication time by the remaining communication volume update module 54, the process of updating the remaining communication volume information based on communication destination information and a prescribed period is continuously performed by the remaining communication volume update module 54 as described above.

Subsequently, in the state in which communication by the mobile communication terminal 2 is in progress (step S61), a disconnection request (request to terminate mobile communication) is transmitted from the mobile communication terminal 2 to the SGSN 4 (step S62). When the reception module 53 of the GGSN 5 receives the disconnection request from the SGSN 4 (step S63), the remaining communication volume update module 54 of the GGSN 5 stops subtraction of the remaining communication time (step S64). Subsequently, a disconnection reply is transmitted from the GGSN 5 to the SGSN 4 (step S65). Here, a notification of the remaining communication time updated by the remaining communication volume update module 54 is given from the GGSN 5 to the SGSN 4, and the remaining communication time is updated accordingly in the SGSN 4 (step S66). Then, a disconnection reply is transmitted from the SGSN 4 to the mobile communication terminal 2 (step S67). It is noted that the stop of subtraction of the remaining communication time by the remaining communication volume update module 54 of the GGSN 5 in step S64 may be executed immediately after any one of steps S63 to S67. Preferably, it is executed immediately after S63. If the stop of subtraction of the remaining communication time by the remaining communication volume update module 54 is executed immediately after S63, the subtraction of the remaining communication time can be stopped after a disconnection request is received by the GGSN 5 without fail. The operation in steps S61 to S67 above corresponds to disconnection from the mobile communication terminal 2.

The invention according to the second embodiment can solve, for example, a problem that billing cannot be processed on such a detailed basis for each communication destination in that connection to a prescribed communication destination by a mobile communication terminal is targeted for billing while connection to another prescribed communication destination is not exempted from billing.

The foregoing first and second embodiments mainly use a communication system based on GPRS. However, the present invention is not limited to such a communication system and is applicable appropriately to a communication system capable of communicating packet data, for example, applicable to a new communication system such as LTE (Long Term Evolution). In this case, an equivalent to the GGSN 5 is a P-GW (Packet Data Network Gateway), and an equivalent to the SGSN 4 is an MME (Mobility Management Entity) or an S-GW (Serving Gateway). An equivalent to the contract information management device 6 is an HSS (Home Subscriber System). PCRF (Policy and Charging Rule Function) may be used as the contract information management device 6.

In the exchange and the communication management method as described above, updating of the remaining communication volume information based on data communication by the mobile communication terminal 2 is started when a request to start mobile communication by the mobile communication terminal 2 is received, and updating of the remaining communication volume information based on data communication by the mobile communication terminal 2 is stopped when a request to terminate mobile communication by the mobile communication terminal 2 or another exchange is received. Accordingly, the track record of transmission/reception of communication data from start to end of mobile communication can be targeted for billing. Thus, accurate billing management that matches the actual communication track record can be provided. In addition, in the exchange and the communication management method in this manner, updating of the remaining communication volume information based on data communication by the mobile communication terminal 2 is started when a request to set the preservation state in mobile communication by the mobile communication terminal 2 is received, and updating of the remaining communication volume information based on data communication by the mobile communication terminal 2 is stopped when a request to reset the preservation state in mobile communication by the mobile communication terminal or another exchange is received. Accordingly, the preservation state, that is, a period of time during which a user is temporarily not performing data communication can be exempted from billing. Thus, accurate billing management that matches the actual communication track record can be provided.

In the exchange and the communication management method in this manner, when a connection request for mobile communication to a prescribed communication destination indicated by the communication destination information by the mobile communication terminal 2 is received in a prescribed period, the remaining communication volume information of the mobile communication terminal 2 is updated based on the prescribed period of time. Accordingly, only mobile communication to a prescribed communication destination can be targeted for billing. Thus, accurate and flexible billing management that matches the actual communication track record can be provided.

In the exchange and the communication management method in this manner, when a connection request for mobile communication to a communication destination other than a prescribed communication destination indicated by the communication destination information by the mobile communication terminal 2 is received in a prescribed period, the remaining communication volume information of the mobile communication terminal 2 is updated based on the prescribed period of time. Accordingly, mobile communication to a prescribed communication destination can be exempted from billing. Thus, accurate and flexible billing management that matches the actual communication track record can be provided.

In the exchange and the communication management method in this manner, in a case where the mobile communication terminal 2 performs mobile communication to a communication destination indicated by the communication destination information and a communication destination other than the communication destination indicated by the communication destination information in a prescribed period, billing exemption can be granted in the prescribed period. Thus, accurate, detailed, and flexible billing management that matches the actual communication track record with consideration for user's convenience can be provided.

### Reference Signs List

1 communication system, 2 mobile communication terminal, 3 RNC, 4 SGSN, 5 GGSN, 6 contract information management device, 7 network, 41 remaining communication volume storage module, 42 reception module, 43 remaining communication volume update module, 44 update start module, 45 update stop module, 51 communication destination storage module, 52 remaining communication volume storage module, 53 reception module, 54 remaining communication volume update module.

## Claims

1. An exchange that relays communication data by mobile communication when a mobile communication terminal performs mobile communication, the exchange comprising:
reception means for receiving a request signal from the mobile communication terminal or another exchange;
remaining communication volume storage means for storing remaining communication volume information indicative of a remaining communication time or a remaining communication data volume that allows the mobile communication by the mobile communication terminal; and
remaining communication volume update means for updating the remaining communication volume information stored in the remaining communication volume storage means, wherein
when the reception means receives a request to start the mobile communication by the mobile communication terminal, the remaining communication volume update means starts updating the remaining communication volume information based on data communication by the mobile communication terminal,
when the reception means receives a request to terminate the mobile communication by the mobile communication terminal or another exchange, the remaining communication volume update means stops updating the remaining communication volume information based on data communication by the mobile communication terminal,
when the reception means receives a request to set a preservation state in which radio resources are released with a connection state being logically kept in the mobile communication by the mobile communication terminal, the remaining communication volume update means stops updating the remaining communication volume information based on data communication by the mobile communication terminal, and
when the reception means receives a request to reset the preservation state in the mobile communication by the mobile communication terminal or another exchange, the remaining communication volume update means starts updating the remaining communication volume information based on data communication by the mobile communication terminal.

2. An exchange that relays communication data by mobile communication when a mobile communication terminal performs mobile communication, the exchange comprising:
reception means for receiving a request signal from the mobile communication terminal or another exchange;
remaining communication volume storage means for storing remaining communication volume information indicative of a remaining communication time or a remaining communication data volume that allows the mobile communication by the mobile communication terminal;
remaining communication volume update means for updating the remaining communication volume information stored in the remaining communication volume storage means; and
communication destination storage means for storing communication destination information indicative of a communication destination targeted for updating of the remaining communication volume information by the remaining communication volume update means, wherein
when the reception means receives a connection request for the mobile communication to the communication destination indicated by the communication destination information stored in the communication destination storage means by the mobile communication terminal in a prescribed period, the remaining communication volume update means updates the remaining communication volume information of the mobile communication terminal based on the prescribed period of time.

3. The exchange according to claim 2, wherein the communication destination storage means stores communication destination information indicative of a communication destination exempt from updating of the remaining communication volume information by the remaining communication volume update means, and
when the reception means receives a connection request for the mobile communication to a communication destination other than the communication destination indicated by the communication destination information stored in the communication destination storage means by the mobile communication terminal in a prescribed period, the remaining communication volume update means updates the remaining communication volume information of the mobile communication terminal based on the prescribed period of time.

4. The exchange according to claim 2 or 3, wherein when the reception means receives a connection request for the mobile communication to the communication destination by the mobile communication terminal and a connection request for the mobile communication to a communication destination other than the communication destination in a prescribed period, the remaining communication volume update means does not update the remaining communication volume information of the mobile communication terminal.

5. A communication management method comprising:
a reception step in which an exchange that relays communication data by mobile communication when a mobile communication terminal performs mobile communication receives a request signal from the mobile communication terminal or another exchange;
a remaining communication volume storage step in which the exchange stores remaining communication volume information indicative of a remaining communication time or a remaining communication data volume that allows the mobile communication by the mobile communication terminal; and
a remaining communication volume update step in which the exchange updates the remaining communication volume information stored in the remaining communication volume storage step, wherein
when a request to start the mobile communication by the mobile communication terminal is received in the reception step, the remaining communication volume update step starts updating the remaining communication volume information based on data communication by the mobile communication terminal,
when a request to terminate the mobile communication by the mobile communication terminal or another exchange is received in the reception step, the remaining communication volume update step stops updating the remaining communication volume information based on data communication by the mobile communication terminal,
when a request to set a preservation state in which radio resources are released with a connection state being logically kept in the mobile communication by the mobile communication terminal is received in the reception step, the remaining communication volume update step stops updating the remaining communication volume information based on data communication by the mobile communication terminal, and
when a request to reset the preservation state in the mobile communication by the mobile communication terminal or another exchange is received in the reception step, the remaining communication volume update step starts updating the remaining communication volume information based on data communication by the mobile communication terminal.

6. A communication management method comprising:
a reception step in which an exchange that relays communication data by mobile communication when a mobile communication terminal performs mobile communication receives a request signal from the mobile communication terminal or another exchange;
a remaining communication volume storage step in which the exchange stores remaining communication volume information indicative of a remaining communication time or a remaining communication data volume that allows the mobile communication by the mobile communication terminal;
a remaining communication volume update step in which the exchange updates the remaining communication volume information stored in the remaining communication volume storage step; and
a communication destination storage step in which the exchange stores communication destination information indicative of a communication destination targeted for updating of the remaining communication volume information in the remaining communication volume update step, wherein
when a connection request for the mobile communication to the communication destination indicated by the communication destination information stored in the communication destination storage step by the mobile communication terminal is received in a prescribed period in the reception step, the remaining communication volume update step updates the remaining communication volume information of the mobile communication terminal based on the prescribed period of time.
